# EUROPEAN PATENT APPLICATION

(11) **EP 3 023 868 A1**
(43) Date of publication of application: **25.05.2016**
(21) Application number: 14826688.5
(22) Date of filing: 17.07.2014
(51) Int. Cl.: G06F 3/041, G06F 3/044

(54) **IMAGE DISPLAY SYSTEM AND INPUT DEVICE**

(30) Priority: 17.07.2013 JP 2013148975; 18.05.2014 JP 2014102923
(71) Applicant: ESU. WAI. ESU, INC., Tokyo 111-0043 (JP); Touchcard, Inc., Tokyo 103-0025 (JP)
(72) Inventor: CHIBA, Nobuyuki, Saitama, 3470063 (JP)
(74) Representative: Pfenning, Meinig & Partner mbB
(86) International application number: PCT/JP2014/069029
(87) International publication number: WO 2015/008828

(57) **Abstract**

Provided is a new input unit using a touch panel in a simulation or game. The present invention relates to a program executed by an electronic apparatus (1) including a capacitive detection-type touch screen panel (3) capable of detecting a plurality of touch positions as an image display unit. The present invention also relates to an electronic apparatus (1) and an input device (2). An object image of which a form changes based on a change of set parameters is displayed on the image display unit, and the parameters are changed based on a combination of the touch positions detected by the image display unit. The combination of the touch positions is configured by detected portions provided in the input device.

## Description

### TECHNICAL FIELD

The present invention relates to an image display system executed by an electronic apparatus including a capacitive detection-type touch screen panel and an input device.

### BACKGROUND ART

Conventionally, there is a growth simulation device that changes humans, animals, or/and plants displayed virtually and a virtual object not existing in actuality over time and based on an operation of a user and displays them, on various terminals having an image display function. For example, there are a portable electronic game machine and an image display control method described in Patent Literature 1.

Various forms exist in a growth simulation and parameters set to an object becoming a growth subject are changed so that the display in which the object is grown is performed. Methods of changing the parameters are various and there are methods based on an input using a keyboard or an operation switch, acquisition of information by communication with other apparatus, and acquisition of information by a recording medium such as a memory card.

Recently, a portable electronic apparatus in which a display displaying an image, such as a tablet-type terminal and a smart phone, functions as a touch panel used for an operation input is used increasingly. In this electronic apparatus, a touch screen (hereinafter, the touch screen and the same device as the touch screen are referred to as the "touch panel") capable of sensing a plurality of indicated points on a screen at the same time, described in Patent Literature 1, is used. The touch panel is provided by arranging a plurality of capacitive sensing devices detecting a change of the capacitance on a layer approached to an image display surface such as a liquid crystal panel at a small interval. The touch panel provided as described above is configured such that the position coordinates of a plurality of objects approached to the screen and the position coordinates of the plurality of objects moving on the screen can be detected at the same time.

In the touch panel, one point on the panel on which an image is displayed is touched with a fingertip, the fingertip is slid, or an interval of two fingertips touching the touch panel is continuously detected, so that the static coordinates of the indicated coordinates, a change of the indicated coordinates, and a change of a position relation of the plurality of indicated coordinates are acquired and are arithmetically processed by a processor in the electronic apparatus, as described in Patent Literature 2 and Patent Literature 3. For information regarding a touch position of the fingertip, a noise is removed by executing a filtering process illustrated in Figs. 17A to 17C of Patent Literature 2 by the processor and detection precision of the position indicated by the fingertip is raised.

### CITATION LIST

### Patent Literature

Patent Literature 1: JP10-207342 A
Patent Literature 2: JP2007-533044 W
Patent Literature 3: JP2008-508600 W

### SUMMARY

### Technical Problem

In the simulation device according to the related art described above, a user operates a ten key, decides numerical values with respect to a plurality of kinds of element data (water, light, and fertilizer) to grow the plants, and provides individual elements according to selection amounts to the plants. Accordingly, prepared images of individual growth steps are displayed based on the operation. Here, although various simulation games to change forms of objects displayed on the screen are known, the operations of them are generally made by a switch operation. In addition, in a general game, various inputs are performed using an operation unit such as a controller.

Meanwhile, the electronic apparatus such as the smart phone and the tablet terminal capable of performing various operations by touching the screen (touch panel) as described above is commonly used. When the game is played with the electronic apparatus capable of performing the operation by the screen touch, a GUI image displayed on the screen is used by the user as a switch to play the game. That is, a mechanical switch is simply replaced with an image, and the user in puts the operation using the image as the switch.

As described above, there are various games in which the GUI switches displayed on the touch panel are operated. However, there is no case in which the game is progressed by executing an input to the touch panel by an input device holding constant information.

The present invention has been made in view of the above circumstances and an object of the present invention is to provide an electronic device including an input device holding information to recognize simulations or progressions of various games as a constant command or operation, not a simple operation input, a program using the input device, and an electronic apparatus capable of progressing a process of the game by the input device by executing the program. In addition, an object of the present invention is to provide a new input unit using a characteristic of a touch panel in a simulation or a game.

### Solution to Problem

To achieve the above objects, the present invention provides an image display system using an electronic apparatus including a capacitive detection-type touch screen panel as an image display unit. The touch panel detects a plurality of touch positions. The system includes a control unit that changes a form an object image displayed on the image display unit based on a change of set parameters or replaces the object image with another image based on the change of the set parameters. The parameters are changed by an input device having a plurality of detected portions detected by the capacitive detection-type touch screen panel.

In addition, the present invention provides an input device having a plurality of detected portions detected by a capacitive detection-type touch screen panel. The device includes a planar detected region that touches the capacitive detection-type touch screen panel directly or indirectly, the planar detected region including the plurality of the detected positions. The plurality of the detected portions in the planar detected region includes a first detected portion having a larger area than areas of the other detected portions and the other detected portions arranged around the first detected portion and having smaller areas than the area of the first detected portion, and the first detected portion and the other detected portions are connected by a conductive line portion having a narrow width.

Further, the first detected portion and the other detected portions are arranged on a base of a card shape member, and the detected portions other than the first detected portion are coated with a sheet, an ink, or a pigment.

### Advantageous Effects

The present invention has an effect of executing an operation or an instruction affecting an image, an operation, and an expression of an object displayed in a video (image) display simulation or a game by an input device detected by a touch screen panel, not a button operation.

For example, if an input card on which a picture of a sardine is drawn touches the touch screen panel, a command to provide the sardine as a feed for the object can be issued with an operation for providing the feed in actuality. A feed provision result can be transmitted as a visual expression such as a change of a video (image) of the object displayed on a screen to a user by an internal process such as a change of parameters by a program process.

The input device according to the present invention and other associated unit touch the touch screen panel without needing the button operation as described above, so that a predetermined command is executed in an electronic apparatus. This is, a unique phenomenon for a user (particularly, a child) who uses the electronic apparatus as a game machine or a plaything and a unit sufficient for generating excitement can be provided. The present invention has an effect of providing a new unit in a field of a simulation or a game.

In addition, the input device according to the present invention arranges conductors (detected portions) having different sizes to be detected by the touch panel. Preferably, a large detected portion having an area not beyond a detection limit and detected portions having areas smaller than the area of the large detected portion are provided. The detected portions are connected by a narrow conductive line portion.

As a result, even though a human body does not touch the detected portions, capacitance held by the detected portion having the large area can be shared with the other detected portions, thereby improving the accuracy of the detection. In addition, when the input device is configured such that the human body can touch the detected portion having the large area directly, each detected portion can be detected with high accuracy while a touch portion with the human body functions as the detected portion of the touch panel.

Even in the case in which the detected portion is coated, if the human body (finger) approaches the detected portion having the large area, the capacitance held by the human body affects each detected portion and each detected portion can be detected with high accuracy.

### BRIEF DESCRIPTION OF DRAWINGS

Fig. 1 is a diagram illustrating a card-type input device according to the present invention and a use state of the input device.
Fig. 2 is a diagram illustrating conductive portions configured from conductive materials laminated in an input card.
Fig. 3 illustrates an example of printing on an input card.
Fig. 4 is a schematic diagram of an electronic apparatus and a system according to the present invention.
Fig. 5 illustrates an example of an image displayed on an image display unit 3.
Fig. 6 is a diagram illustrating an example of an object image.
Fig. 7 is a flowchart illustrating an example of a program according to the present invention.
Fig. 8 is a diagram illustrating an example of parameters.
Fig. 9 is a diagram illustrating an example of attribute values.
Fig. 10 is a diagram illustrating an example of code information.
Fig. 11 is a diagram illustrating a use example of an input device according to the present invention.
Fig. 12 is an exploded perspective view of a card to be an example of an input device according to the present invention.
Fig. 13 is a diagram illustrating detected portions of an input device according to the present invention.
Fig. 14 is an exploded perspective view of a card to be another example of an input device according to the present invention.
Fig. 15 is an exterior view of a card to be another example of an input device according to the present invention.
Fig. 16 is an exploded perspective view of a card to be another example of an input device according to the present invention.
Fig. 17 is an exterior view of a card to be another example of an input device according to the present invention.
Fig. 18 is a diagram illustrating another example of detected portions of an input device according to the present invention.

### DESCRIPTION OF EMBODIMENTS

Hereinafter, embodiments to carry out the present invention will be described.

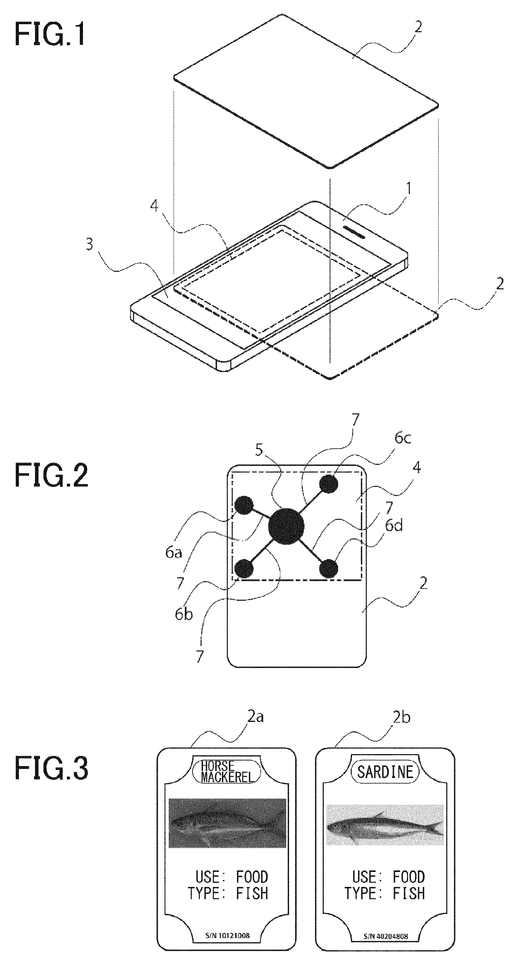

Fig. 1 illustrates an exterior view of an electronic apparatus 1 formed as a so-called smart phone used in the present invention and an input device (hereinafter, referred to as the "input device" or the "input card") 2 inputting information to the electronic apparatus 1 and formed in a card type.

Fig. 1 illustrates a state in which the input card 2 is superimposed on an image display unit 3 of the electronic apparatus 1, as a use state of the input card 2.

Fig. 2 is a diagram illustrating conductive portions becoming detected portions configured from conductive materials stacked in the input card 2. The input card 2 has a thin sheet shape formed with a thickness of about 0.5 mm, for example, has an external shape to be approximately rectangular, and has a size approximately equal to sizes of a credit card and a trump card, in which the card can be held by fingertips. The conductive portions (detected portions) are formed of a metal foil or a conductive ink and are arranged at a leading edge side (detected region 4) of the input card 2. In the detected region 4, one detected portion (first detected portion) 5 having an area larger than areas of the other detected portions and four detected portions 6 (6a, 6b, 6c, and 6d) having the areas smaller than the area of the first detected portion are provided. Each detected portion 6 is electrically connected to the first detected portion 5 by a conductive line portion 7 having a narrow width. The input card 2 is formed of paper or synthetic resin and a variety of information is appropriately printed on both a surface and a back surface.

Even though the detected portions 5 and 6 are exposed, this does not cause a problem functionally (this is preferable functionally). However, when the detected portions 5 and 6 are used for a game, the detected portions 5 and 6 are hidden by superimposition of printing layers or sheet pieces. The detected portion 5 is formed to be larger than the other detected portions, in a range in which a single body of the detected portion 5 can be detected by a touch panel T. For example, when the detected portion has a size approximately equal to a size of the detected region 4 occupying at least the half touch panel T, a valid input (touch input) as a general function of the electronic apparatus is disabled. The detected portion 5 is formed in a circular shape or a shape similar to the circular shape, with a diameter of about 11 mm to 20 mm.

The detected portions 6 have an area in which detection is enabled by the touch panel T and are each formed as a foil piece of a disk shape with a diameter of about 5 mm to 10 mm. The detected portions 6 do not need to have the same shape. The detected portions 6 may have different sizes or may have different external shapes by mixing a round shape and a rectangular shape.

The detected portion 5 receives a charge necessary for detection (capacitive coupling of a detection element portion) by the touch panel T, between the detected portion 5 and the detected portions 6 electrically coupled to the detected portion 5 via the conductive line portion 7. The detected portion 5 and a human body may be touched directly depending on the performance of the touch panel T. However, if the performance of the touch panel T of the electronic apparatus is superior, a touch with the human body is not necessary. Note since the conductive line portion 7 also can be detected by the touch panel, the conductive line portion 7 is formed as narrow as possible. In this embodiment, the conductive line portion 7 is formed with a width of 0.5 mm by one foil plate to form the conductive line portion and other portions. A portion touching the touch panel T is a portion that is approximately the half of the input card 2 having the detected region 4 formed therein. A region opposite to the side provided with the detected region 4 is a portion which the user grips the input card 2.

In an example illustrated in Fig. 1, a longitudinal direction of the touch panel T and a longitudinal direction of the card 2 are orthogonal to each other. However, both the longitudinal directions may be parallel to each other.

Fig. 3 illustrates an example of printing on the input card 2. In an input card 2a, a photo of "horse mackerel" and a use (food) of the card are described on a surface thereof. In addition, in an input card 2b, a photo of "sardine" and a use (food) of the card are described on a surface thereof. A lightly colored portion shows a position of the internally layered wide-area conductive portion 6. The card is used in simulations to be described below and is used at the time of controlling an object displayed on the touch panel (for example, at the time of feeding the object).

The electronic apparatus 1 is exemplarily formed as a smart phone as described above and includes a storage unit and a hardware unit including a communication interface (I/F) 1d to perform communication with a telephone or the Internet and a GPS signal receiver 1e.

An application program (hereinafter, referred to as the "program") to be one of this embodiment is acquired from an application provision server 8 connected via the communication I/F. Further, the electronic apparatus 1 communicates with a code management server 9 or a content provision server 10 via the communication I/F according to a specification of the program and acquires information corresponding to code information to be described below or associated content (image, moving image, music, a variety of other data, or information).

The image display unit 3 is formed as a capacitive detection-type touch panel that can detect a touch of fingers. The electronic apparatus 1 detects five to ten touch positions of fingers almost simultaneously (in short time) using the function of the touch panel 3 and acquires the plurality of detected touch positions as the coordinate positions on the touch panel. A system according to the present invention uses the electronic apparatus 1 having a multi-point detection function, acquires a combination of the plurality of detected coordinate positions as a piece of information (code information), and based on the acquired code information, changes a parameter of the object to be described below.

The detected portions 6 are provided in four places selected from thirty arrangement enabled positions. The thirty arrangement enabled positions are set as an arrangement of a matrix shape of five rows × six columns in the detected region 4, for example. The detected portions 6 are arranged according to the arrangement of the matrix shape other than the detected portion 5 and a surrounding portion thereof. The detected portion 5 occupies a plurality of positions of the arrangement enabled positions set by the matrix and a center thereof is arranged at a middle position of the matrix arrangement.

In this embodiment, a combination of the arrangement configured by the plurality of detected portions 5 and 6 is acquired as one piece of code information by the electronic apparatus 1. The combination is recognized by a program executed on the electronic apparatus 1, and a predetermined process is executed on the combination. Detection positions of the detected portions 5 and 6 are acquired as approximately center positions of the detected portions 5 and 6, and the electronic apparatus 1 determines which portion of the matrix arrangement has the detected portions.

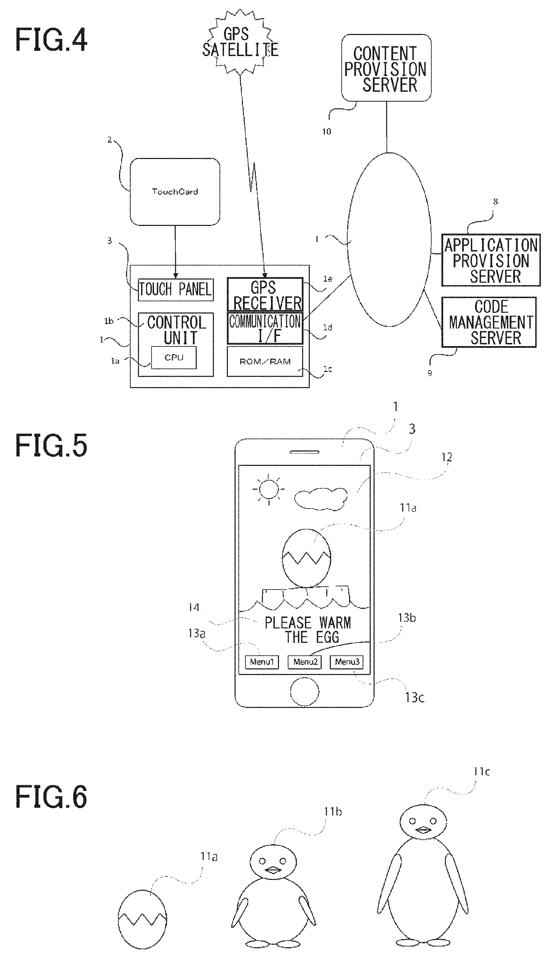

The system according to this embodiment can be formed as a rearing simulation to care for a living thing and grow the living thing. Fig. 5 illustrates an example of an image displayed on the image display unit 3. An egg 11a to be a stage of a first step of a penguin set as an object 11 is exemplarily displayed on the image display unit 3. At the same time, images of a land, a cloud, a sun, and a sky floating above the sea are displayed as a background image corresponding to the stage of the first step. In addition, GUI switches 13a, 13b, and 13c to perform caring (operation) for the object are displayed in the vicinity of a lower edge of the image display unit 3. In addition, a message display unit 14 that requests an operator to care for or control the object is provided.

For the living thing displayed as the object image, images of an egg 11a, a chick 11b, or an adult bird 11c is displayed for each stage of a growth step thereof, as illustrated in Fig. 6. In addition, an individual background image is prepared for each stage and the images of the cloud and the sun transmit situations such as a time zone (for example, a morning, a noon, an evening, and a night) in the daytime and weather (for example, fine weather, cloudy weather, snow, and snowstorm) to the operator. A part of the caring (operation) for the object is provided as a thing corresponding to the background image. For example, the part is an operation for greeting "good morning" in the case of the morning and is an operation for greeting "good night" in the case of the night.

In this system, as the rearing target, for example a penguin, the images showing the growth steps such as the egg 11a, the chick 11b, and the adult bird 11c for each growth stage, images displaying animations, and moving image data are stored. These images and moving image data are provided as independent data. However, in this disclosure, the rearing target, which simulates the penguin, is handled as one object and images and moving images corresponding to the growth stages are displayed as growth images of one living thing. In addition, a process for changing the images based on a program may be executed.

The object as the rearing target has a parameter changing over time from a birth (program start) and a parameter changed by an operation (caring and control for the object) of the user. As the parameters, there are execution or non-execution of feeding, the number of times of feeding, a feeding time interval, the number of times of starting a program, and a countermeasure for a request message. In addition, the stage corresponding to the growth step of the object is provided and the background image corresponds to the stage.

For the object, the displayed images or moving images are appropriately changed by the change of the parameters. As a result, the associated background images and the functions set to the GUI switches 13a, 13b, and 13c are also changed.

The parameters can be changed by recognizing the input card 2 using the electronic apparatus 1 in addition to the passage of the time and the operations of the switches 13a, 13b, and 13c.

The input card 2 has the detected portion 5 and the detected portions 6 of the four places selected from the thirty places, as described above. If the code information configured as described above is represented by a binary system, the code information is represented in the format of (100000 010000 0100010 000100 00000). In addition, the code information is acquired by the program executed by the electronic apparatus 1, so that a command changed to the operation of the GUI switch 13, such as a command to feed the object, a play command, and a command replying to a request from the object, can be input by the input card 2.

In addition, the input card 2 may have a function of providing a new object, of providing a new background image, of paring two objects to allow them to lay an egg, or the like to the electronic apparatus 1 (program). These functions may be executed by the function of the program acquiring the code information. However, the predetermined command, function, and information may be input to the electronic apparatus 1 using the input card 2.

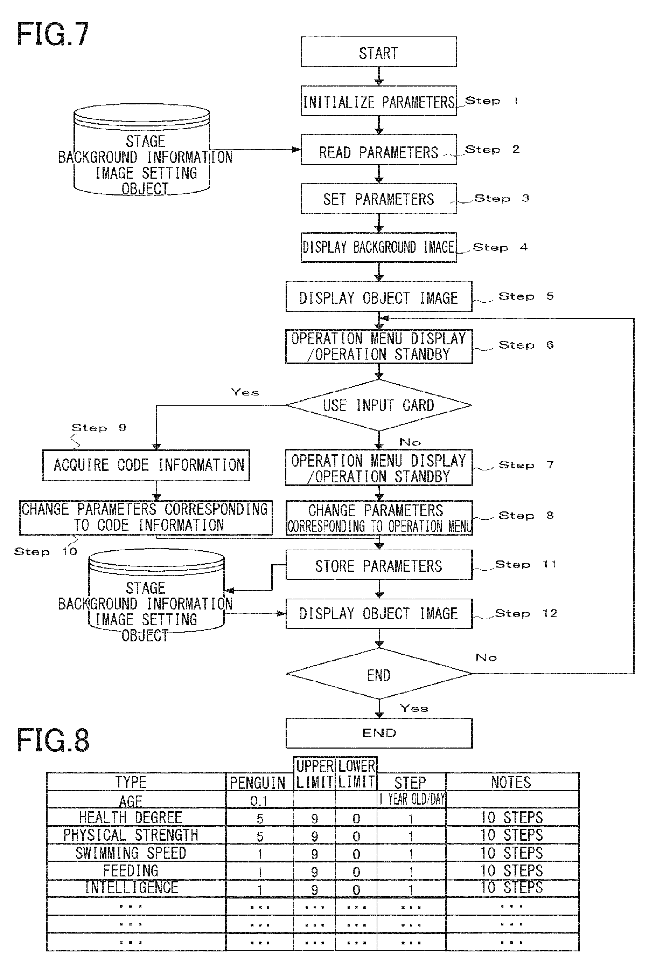

Fig. 7 is a flowchart illustrating an example of a program executed by the electronic apparatus 1. The electronic apparatus 1 is a versatile smart phone and downloads a program necessary for this embodiment from a predetermined server and executes the program. If a program to execute the growth simulation of the penguin is executed, the various parameters such as the object of the rearing target and the background are initialized (Step 1).

Next, the object of the rearing target, the stage associated with the object, and the various data such as the background information and the image are read from a memory in the electronic apparatus 1 storing the information regarding the program from a connected server (Step2). The read parameters and data are set as data defining a rearing condition at a point of time when the program is executed (Step3). The parameters are information changing according to the progress of the simulation, are stored in the electronic apparatus 1 or in the server when the program ends, and are read again when the program starts.

When reading and setting of the program end, the background images and the object image illustrated in Fig. 5 are displayed on the image display unit 3 based on the various conditions at the corresponding point of time (Step4 and Step5). In addition, the GUI switch is displayed as the operation unit for the program, and the program waits for an operation input through the GUI switch (Step6).

One of the GUI switches can be set as a unit to display the parameter showing the state of the object. The state of the object or the necessary operation can be displayed in response to the operation of the GUI switch, in addition to the request or the instruction displayed on the message display unit 14.

In the parameters, the parameters disclosed to the user and the parameters not disclosed to the user exist. The disclosed information includes the passage time from the birth of the object, the states (the states may not be displayed as the parameters at the time of being replaced with the images) of the egg, the chick, and the adult bird, information regarding a desire and a survival such as being hungry or being full, and information regarding an emotion such as being happy or being dissatisfied.

The control for the object can be performed using the function set to the GUI switch (Step7). When the GUI switch is operated, the parameter is changed based on the control content set to the GUI switch ((Step8).

In addition, in the present invention, the operation or the control for the object can be executed using the input device (i.e., the input card 2). As a result, the parameters set to the object can be changed (Step 9 and Step10).

For example, the input card 2 has code information corresponding to food such as "sardine" and "horse mackerel". In addition, when the code information set to the input card 2 and information such as the "sardine" and the "horse mackerel" in which the program is stored correspond to each other, the parameters are changed such that the food such as the "sardine" and the "horse mackerel" is provided to the object using the input card 2. The parameters regarding the desire, the survival, and the emotion set to the object are changed in linkage with the control. As such, the parameters changing disadvantageously like the decrease and the degradation over time are provided and the process for correcting the disadvantages is executed using the input card 2.

The parameters changed by the various operations are stored in the storage unit or the server. When the object or the background is changed in accordance with the change of the parameters, corresponding information is read and the information is displayed on the screen (Step11 and Step12). For example, as illustrated in Fig. 6, an image according to the time passage and the caring situation is displayed. Hereinafter, the same operation can be executed until the process ends or the object dies.

The object has the parameter changed by the operation of the user or the passage of the time and the attribute information not affected by the operation of the user or the passage of the time.

An example of the parameters is shown in Fig. 8. The parameters include parameters grasped as quantitative information such as a numerical value and large, medium, and small and parameters provided as binary information such as existence/non-existence. For example, for an age of the object, a process for converting an actual day into one year of the objet to increase the age of the object by one year every day is executed. A life span set as attribute information is set as the upper limit, and the object can survive continuously by appropriately caring the object continuously. In addition, each parameter changes between a minimum value and a maximum value, and by providing appropriate operations the parameter increases while the parameter decreases by leaving the object or by providing an inappropriate operation. Factors to increase and decrease the parameter are appropriately set according to the type of the application and the difference of the content.

The change of the parameter differs according to the content represented by the application, depending on a request for the operator and an operation against the request. In a general case, the object grows normally (the image is changed) by repeating the appropriate operation at the appropriate timing. However, the object may abnormally and abruptly grows with a certain probability and may be displayed to give a dramatic impact.

In the growth simulation of the object according to the embodiment, when the operation of the operator using the input card 2, which depends on the behavior of the operator, and the time element (passage of a constant time), which does not depend on the behavior of the operator, satisfy the predetermined conditions, the simulation displays a next-generation object image. The predetermined conditions are determined for each generation. For example, the predetermined conditions are that parameters such as a health degree, a physical strength, and a swimming speed satisfy at least five steps out of ten steps. In addition, the predetermined time is defined for each generation. However, the predetermined time is two days (two years in the age in the program) after the birth and is set in a unit of five days thereafter.

In addition, the growth timing (transition time of the image) of the object is calculated based on the timing when the above conditions are satisfied and is randomly set between 1 to 24 hours. As a result, even when the program is repetitively used, the growth (image transition) timing of the object is different. For this reason, the simulation can keep the players interested.

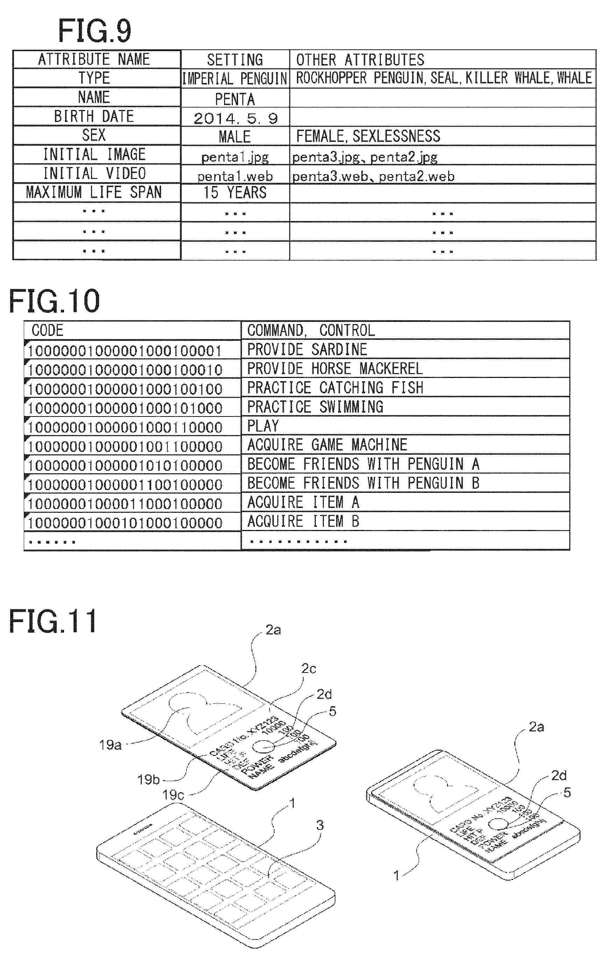

Fig. 9 shows an example of attribute values. The attribute values are fixed information that is not changed by the operation of the user. The information includes a type, a name, a birth date, and the like. The information may be generated automatically by the application or may be set previously as a data table. In addition, the name may be given by the user when the program starts.

Position information of the detected portion acquired by recognizing the input card 2 is handled as the code information, as described above.

Fig. 10 shows a part of the code information. As illustrated, one piece of code information corresponds to one order or one control for the object and the order or control can be performed for the object by using the input card 2.

In addition, an image showing the object and numerical values and attributes are printed on a surface of the card 2, as in other example to be described below.

In the example described above, this system is formed as the rearing simulation. However, this system can be used for other simulations. For example, various wearing articles such as shirts, pants, dresses, hats, and shoes can be worn on the object showing the human displayed on the screen. In addition, the wearing articles are associated with the input card, so that a simulation to cause the object to change the clothes can be performed. A point showing an evaluation is set to a combination of various items, so that a process for giving a high evaluation value to a combination having a superior fashion sense can be executed.

As such, various simulations or image display games can be provided using the input card as the input device according to the present invention. In addition, the present invention can be applied to a competition game using the cards.

### First Embodiment

Next, another example for the input device will be described using the drawings. Various forms exist in the input device and a method of touching the human body with the detected portion and a method of not touching the human body with the detected portion exist. In addition, a method of causing the human body to approach the detected portion, but not touching the human body with the detected portion exists. As the forms of the input device, various forms such as an object formed in a card shape, a figure, a solid molded object having a height, and a mechanism product having an operation mechanism can be applied.

The drawing illustrated at a left side of Fig. 11 illustrates a card 2a for a game to which the present invention is applied and a portable terminal 1 to be an electronic apparatus using the card 2a for the game as an input device. The drawing illustrated at the right side of Fig. 11 illustrates a state in which the card 2a for the game is superimposed on an image display region (screen) 3 of the portable terminal 1. In the image display region 3 of the portable terminal 1 of a tablet type, the same touch panel that is equal to the touch panel described in Patent Literature 2 and can detect a change of capacitance is provided.

The capacitive detection-type touch panel detects the direct touch or the proximity of the fingertips for the surface of the touch panel.

The card 2a for the game according to this embodiment has a similar external shape to an external shape of cards sold as a trump card, a trading card, and a card for a competition game and is made of an appropriate material such as paper, synthetic resin, an insulating material used for a printed board, and a complex material thereof.

In addition, the card 2a for the game illustrated in Fig. 11 is exemplarily formed as the competition card using the paper as the material. For this reason, a character image 19a appearing in the game, information 19b regarding the character, and a parameter 19c are displayed on the surface of the card 2a for the game by printing. The printed information shows the content regarding the game.

The card 2a for the game is formed as a laminate with a thickness of about 1 mm including two layers or a plurality of layers provided with a conductive portion having, as described in detail below. An opening 2d of a round hole shape is provided in a surface layer portion 2c of the card 2a for the game and a fingertip to be a part of the human body can be touched with a conductive portion 5 provided in an intermediate layer portion through the opening 2d. That is, the conductive portion 5 is a touch portion which the fingertip touches. However, the conductive portion 5 is arranged at a position lower than a surface of the surface layer portion 2c by the thickness of the paper. In addition, as illustrated in the drawing of the right side of Fig. 11, the card 2a for the game is superimposed on the image display region 3 of the portable terminal 1 and the fingertip touches the conductive portion 5, so that prescribed information of the card 2a for the game can be detected by the portable terminal 1.

As described above, in the case of the electronic apparatus having the superior sensitivity, even though the fingertip does not touch the conductive portion 5, the entire detected portions can be detected. In this case, because the opening 2d of the round hole shape is not necessary, the opening 2d may not be provided. In this case, a card coated with both the detected portion 5 and the detected portions 6 can be used.

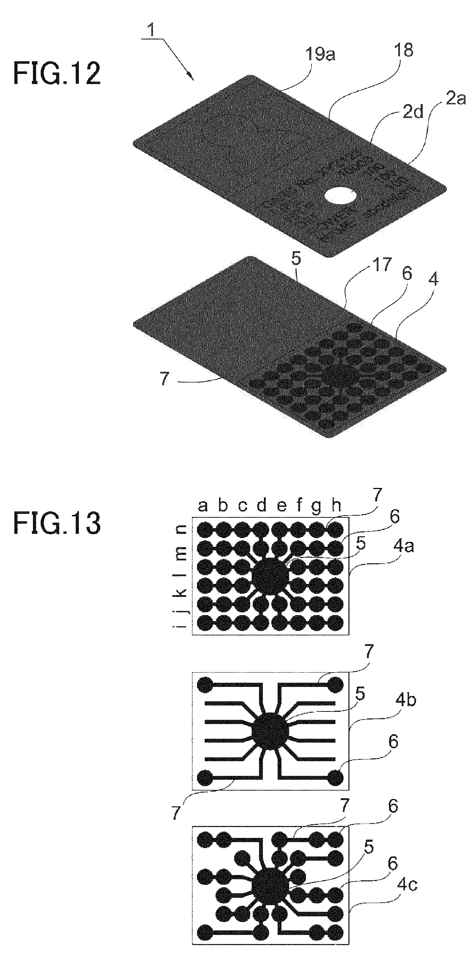

Fig. 12 illustrates an example of an internal structure of the card 2a for the game. The card 2a for the game is formed as a laminate of a base sheet 17 using the paper as the material and a surface layer sheet 18 using the paper as the material. The paper is an insulating material. The surface of the base sheet 17 is an intermediate layer of the card 2a for the game, and a plurality of small regions (detected portions) 6 formed by printing of a conductive ink or pigment or attachment of a metal foil and having one or more prearranged areas are formed. The detected portions 6 are portions charged by the touch with the human body and portions detected by a capacitive detection element of the touch panel.

The detected portions 6 in this embodiment are formed as circular small regions having a diameter of 5 mm and the plurality of detected portions 6 having the same shape are arranged in a matrix shape in approximately a half region (detected region 4) of the card 2a by mixing with portions not provided with the detected portions 6. The detected portions 6 are electrically connected to the conductive portion 5 by a conductive path 7 having a narrow width. The conductive portion 5 is formed as a circular region having a diameter of about 12 mm and is provided to be touched with the human body. However, the conductive portion 5 is a portion that also has a function as the detected portion.

In the above example, to connect the plurality of detected portions 6 and the conductive portion 5 to each other, the conductive path 7 having the narrow width to connect each detected portion 6 and the conductive portion 5 is formed by offset printing, silk screen printing, inkjet printing, and other printing method. An important point in this example is to form the conductive path 7 narrowly and decrease a charge held by the conductive path 7 to prevent occurrence of a noise when the conductive portion 5 and the detected portions 6 are detected.

In the case of the touch panel detecting the touch of the fingertip, a process for not assuming a touch as an input even when the touch panel is touched by a finger or a pointed pen touches the touch panel is executed. This is because it is difficult to determine whether detected information is a noise or a correct input. Hence, it determines the touch as the correct input if one or more prearranged areas of the touch panel are touched to prevent an erroneous operation of the apparatus. In addition, if an excessively large area of the touch panel is touched, that is, if the touch of the conductive material or the human body occupies a wide range of the touch panel, it determines that the touch as an incorrect input.

In the smart phone or the tablet terminal, when a circular region having a diameter of about 5 mm is recognized according to a touch shape or area of the fingertip, this is determined as the correct input. The detected portion 6 in this embodiment is formed in a shape of a circle having a diameter of about 5 mm, in accordance with a type of an apparatus.

A size of a region capable of determining the touch as the input is different depending on the electronic apparatus 1 and determination accuracy may be different depending on an operation speed or a processing program of the apparatus. In addition, when detection accuracy is improved in the future, the shape or the size of the detected portions 6 should be adjusted. Therefore, the circular shape having the diameter of 5 mm is a size according to an average specification of the portable terminal 1 at the present time. That is, the circular shape having the diameter of 5 mm is only an example and should not be limited thereto.

In short, the shapes and the sizes of the detected portion 5, the detected portions 6, and the conductive path 7 are set according to the size in which the change of the capacitance can be received as the input. In addition, a technical gist of this embodiment is that the arrangement or the combination of the detected portions 5 and 6 is acquired as a piece of information and the information can be used as unique identification information or data of the card 2a for the game by various programs. Because it is not intended that the conductive path 7 is recognized, the conductive path 7 is formed narrowly as possible.

In the case of the card 2a for the game illustrated in Fig. 12, the thickness of the base sheet 17 is controlled not to increase excessively. This is because, when the thickness of the base sheet 17 is large, a distance between the detected portions 5 and 6 and a capacitance detection portion increases, resulting in determination of the detection accuracy. Because an amount of charge held between the detection portion and the detected portions decreases in inverse proportion to the square of the distance, it becomes difficult to determine the proximity of the detected portions as the distance increases. Therefore, both sides are preferably arranged to be close, but not to be electrically connected, similar to an electrode used for a capacitor.

Fig. 13 is a diagram illustrating an arrangement example of the detected portion (conductive portion) 5, the detected portions 6, and the conductive path 7. A detected region 4a illustrated at an upper part of Fig. 13 has the detected portion 5 arranged at a center and the detected portions 6 arranged horizontal and vertical directions. Specifically, the detected region 4a has a combination of six (ijklmn) × eight (abcdefgh) in the horizontal and vertical directions, except for the center portion, as a pattern of information held in the detected region 4a. The detected region 4a is a region where the detected portions 5 and 6 are arranged and is a region where the arrangement of the detected portions 5 and 6 is read as a single piece of information by the electronic apparatus 1. In the drawing, the detected portions 6 are displayed at all positions where the detected portions can be arranged, for the purpose of description.

In this embodiment, the detected portions 6 can be provided in forty-four places in the detected region 4a, except for the conductive portion 5 provided at the center. When the card 2a is formed according to the electronic apparatus in which the number of touches detected at the same time is five, the detected portions 6 are arranged in the conductive portion 5 provided at the center and the four places selected from the forty-four places. As a result, the detected portions of the five places are provided in the card 2a.

A detected region 4b illustrated at a middle part of Fig. 13 shows a pattern in which the detected portion 5 is arranged at a center of the detected region 4b set to a rectangular shape and the detected portions 6 are provided at four corners. That is, it shows the case in which the detected portions 6 are provided at points (a, n), (a, i), (h, n), and (h, i) of four places forming an outline of the detected region 4b, and the conductive portion 5 is provided in a center region corresponding to the points of the four places. The parts of the conductive path 7 not connected to the detected portions 6 in the conductive path 7 shown in the drawing may be removed.

A detected region 4c shown at a lower part of Fig. 13 shows an example of the case in which the detected portions 6 are arranged at any positions surrounded by the detected portions 6 at four corners. In this example, the unnecessary conductive path 7 is omitted.

As in the examples described above, binary information such as existence/non-existence of the detected portions 6 are given to the positions of six × eight in the horizontal and vertical directions in the game card 2a and the electronic apparatus can obtain unique identification information or data regarding the arrangement of the detected portion 5 and the detected portions 6 in the detected regions 4a, 4b, and 4c as a single piece of information. For unjust use prevention or erroneous recognition prevention, the arrangement information of the detected portions 6 is calculated and if a prescribed condition is not satisfied, input information is not received as information. That is, a check control to prevent the falsification of data and to improve the reliability of the data is appropriately performed.

In the above example, the detected portions 6 are provided inside the card. For this reason, the detected portions 6 cannot be viewed unless the card is broken (of course, the detected portions 6 and the electrode portions corresponding to the detected portions 6 may be exposed visibly). If the user cannot view the detected portions 6, the information of the card cannot be known until the information is read by the electronic apparatus. Therefore, in the case of a game, it makes difficult for the user to predict the progress.

In the game card 2a according to this embodiment, if the detected portion 5 of the center is touched with the fingertip, other detected portions 6 connected to the conductive portion 5 hold a similar charge to the living body connected to the detected portion 5. Accordingly, the electronic apparatus can detect not only the detected portion 5 but also the detected portions 6 without touching the detected portion 6 with a fingertip. As such, the game card 2a according to this embodiment can hold the unique identification information corresponding to the arrangement of the detected portions 5 and 6 and can recognize the identification information by the electronic apparatus.

### Second Embodiment

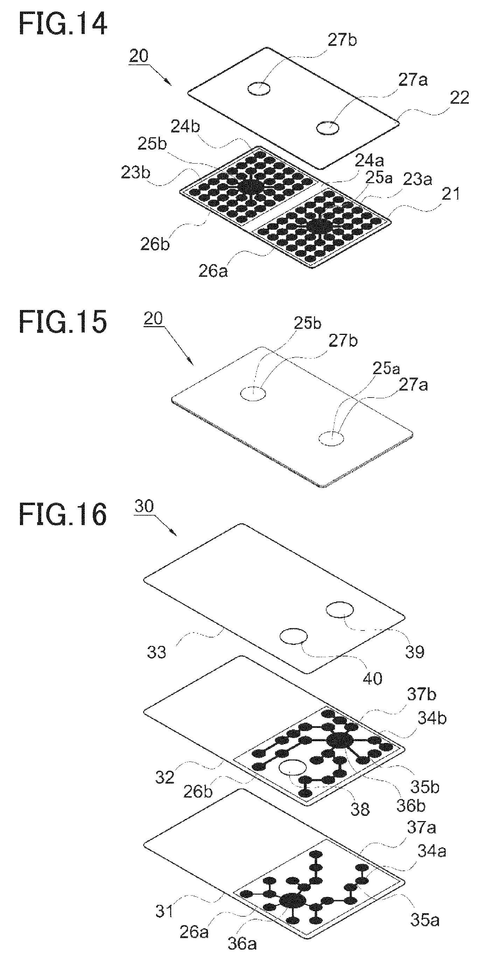

As described above, in the above example, the conductive portion, the detected portions, and the conductive path are formed as a single layer on the plane. In a card 20 illustrated in Fig. 14, a base sheet 21 and a surface layer sheet 22 using paper as a material are adhered to configure one sheet. Two detection regions equal to the detection region 4 including the detected portions 6, the conductive path 7, and the conductive portion 5 are provided on the base sheet 21. That is, in substantially a half region of the base sheet 21, a detection region 26a including detected portions 23a, a conductive path 24a, and a conductive portion 25a is provided; and in the other half region of the base sheet 21, a detection region 26b including detected portions 23b, a conductive path 24b, and a conductive portion 25b is provided. In addition, an opening 27a and an opening 27b are provided at positions corresponding to the conductive portion 25a and the conductive portion 25b, respectively, in the surface layer sheet 22.

Fig. 15 illustrates the card 20 formed by adhering the base sheet 21 and the surface layer sheet 22 having the above configurations. The opening 27a and the opening 27b are provided on the surface layer sheet 22. Thus, the user can touch the conductive portion 25a and the conductive portion 25b through the opening 27a and the opening 27b.

In the card 20 having the above configuration, if the opening 27a is touched, a single piece of information formed by an array of the detected portions 23a provided in the detection region 26a can be read by the electronic apparatus. In addition, if the opening 27b is touched, a single piece of information formed by an array of the detected portions 23b provided in the detection region 26b can be read by the electronic apparatus.

As such, although the card according to this embodiment is one card, a plurality of pairs of information can be held and the information can be read.

### Third Embodiment

Although the card according to any one of the above embodiments is one card, a plurality of pieces of information to be read can be held in one layer of the card and the information can be read. In an embodiment illustrated in Fig. 16, a plurality of pairs of information is held in one card, similar to the above examples. However, a method thereof is different.

In a card 30 illustrated in Fig. 16, a base sheet 31, an intermediate layer sheet 32, and a surface layer sheet 33 using paper as a material are adhered to configure one sheet. Similar to the above examples, the base sheet 31 includes a detection region 37a including detected portions 34a, a conductive path 35a, and a conductive portion 36a. Similar to the above examples, the intermediate layer sheet 32 includes a detection region 37b including detected portions 34b, a conductive path 35b, and a conductive portion 36b. In addition, an opening 38 penetrating from a surface to a back surface is provided at a position corresponding to the conductive portion 36a.

In the surface layer sheet 33, an opening 39 penetrating from a surface to a back surface is provided at a position corresponding to the conductive portion 36b formed in the intermediate layer sheet 32, and an opening 40 penetrating from the surface to the back surface is provided at a position corresponding to the conductive portion 36a of the base sheet 31 and the opening 38 of the intermediate layer sheet 32.

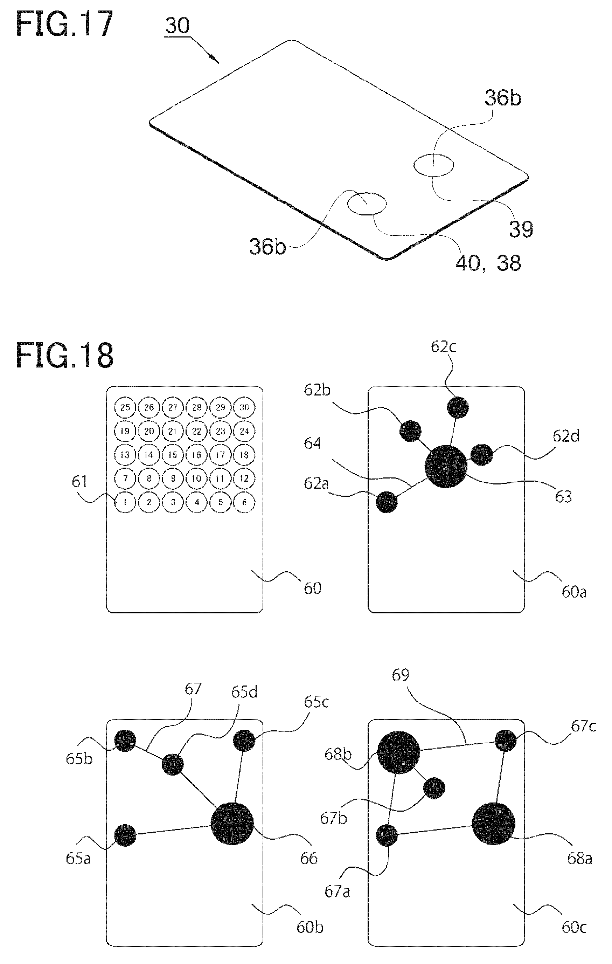

By adhering all of the base sheet 31, the intermediate layer sheet 32, and the surface layer sheet 33, one card 30 illustrated in Fig. 17 is formed and the two openings 39 and 40 are formed in the surface of the card 30. In addition, the conductive portion 36b is arranged at the opening 39 of the surface layer sheet 33 such that the user can touch the conductive portion 36b. Further, the conductive portion 36a is arranged in the opening 40 of the surface layer sheet 33 such that the user can touch the conductive portion 36a through the opening 38 of the intermediate layer sheet 32.

The detection region 37a configured by the detected portions 34a of the base sheet 31 and the detection region 37b configured by the detected portions 34b of the intermediate layer sheet 32 are matched in a lamination direction. Thereby, it is possible to acquire information of both the detection region 37a and the detection region 37b, in the same portion on the touch panel.

With the above configuration, when the conductive portion 36a is touched through the opening 40, the detected portions 34a provided on the base sheet 31 is charged and can be recognized by the touch panel. At this time, the conductive portion 36b is also recognized as the detected portion by the touch panel.

When the conductive portion 36b is touched through the opening 39, the detected portions 34b provided on the intermediate layer sheet 32 is charged and can be recognized by the touch panel. At this time, the conductive portion 36a is also recognized as the detected portion by the touch panel.

When the conductive portion 36a and the conductive portion 36b are touched simultaneously through the opening 40 and the opening 39, combined information of the detected portions 34a and the detected portions 34b can be recognized as a single piece of information by the touch panel.

As described above, in this embodiment, a plurality of information can be held by the single card (one input device). In the drawing, the multiple detected portions are exemplified. However, electronic apparatuses in which the number of multi-touches capable of being acquired at the same time is five to ten common. For this reason, when the card is used for the electronic apparatus, the number of the detected portions should be determined based on the performance of the electronic apparatus.

### Fourth Embodiment

For inputting information using the input device, a reading program is applied for each electronic apparatus. The program may be provided as one process incorporated in the basic program to operate the electronic apparatus or may be provided as one process incorporated in an application program executed on the basic program to operate the electronic apparatus. In addition, the program is used to control an electronic apparatus including a control device having a CPU function, a storage device, a display device, an input device formed as a touch panel, and each unit necessary as other computer unit.

The program according to the present invention is used as a process program linked with a main program or an application program of the electronic apparatus and an input to the touch panel using the input devices of the various forms is received as predetermined information or data.

This program first sets a detection region on the touch panel. For example, an entire region or a specific region of the touch panel is set as the detection region and a change in capacitance is detected by a detection element in the detection region.

A filter process to remove a noise is executed on the detected information as needed and information determined to be normal information is acquired. In addition, based on position information of the detection element to detect the proximity of an object determine to be a normal object, a surface shape or the number and arrangement of the object facing the touch panel are acquired.

In the acquired information, position information of each detection element in which it is determined that an object exists is stored as data, and a detection element group in a predetermined range in which it is determined that the object exists is digitized (encoded with 0 or 1) as one detection unit and is stored. When the input device described in the first embodiment is a detected target, since the arrangement positions of the detected portions are determined to be the matrix as described above, the detection information of a binary value of 0 or 1 at each position on the matrix is stored as data having a fixed length.

By digitizing the detected information for each detection element, the information can be acquired as graphic data such as bitmap data. When each detected portion is detected by the detection element group, the information is acquired as the digitized data having the fixed length. The detected data as described above is output to a game formed according to content and other application program and is used for selection of a displayed moving image, a change of an image, generation of audio, and an operation of the electronic apparatus.

In addition, according to the application program, the input device arranged on the touch panel may be used dynamically so that the input device may be moved and rotated. In this case, the movement and the rotation of the input device are detected by the posture of a unit of a single piece of information including the graphic data of the detected input device or the digitized data having the fixed length and a position for every predetermined interval. Further, the movement or non-movement and the moving amount of the input device are detected by detecting a difference of positions before and after the determination or detecting whether the input device arrives at the assumed position.

This can be used in the case of using a rotating body such as a roulette or in the case of detecting an operation of the input device in which the direction of the card is rotated by 90 degrees from the normal posture in a trading card game.

### Fifth Embodiment

Another structure example of an input device will be described.

Fig. 18 illustrates a configuration example of an input device 60 (60a, 60b, and 60c) having a card shape. In the drawing of the input device denoted with a reference numeral 60, a rectangular card and arrangement enabled positions 61 of detected portions that can be formed on the card are illustrated. The basic arrangement enabled positions 61 of the detected portions are shown as circles by broken lines denoted with reference numerals 1 to 30. The arrangement enabled positions are defined as an arrangement of a matrix shape of five rows × six columns and the detected portions are arranged in places selected from them. In this example, a circular region having a diameter of 8 mm is formed as a conductive detected portion. The arrangement enabled positions 61 are arranged in a rectangle detected region in the arrangement.

The input device 60a has detected portions 62a, 62b, 62c, and 62d provided at four places selected from the arrangement enabled positions denoted with 1 to 30 and one detected portion 63 having a larger area than areas of the four detected portions. The detected portion 63 is formed as a circular region of a diameter of 16 mm to be the double of the diameter of the detected portion 62 having the diameter of 8 mm. In the example illustrated in the drawing, the detected portion 63 is disposed at the center position of the four places of numbers 9, 10, 15, and 16 in the arrangement enabled positions and occupies approximately four detected portions 62 of the arrangement enabled positions. In addition, the other detected portions 62a, 62b, 62c, and 62d are arranged in numbers 1, 17, 20, and 28 in the arrangement enabled positions with the detected portion 63 as a center, and the detected portion 63 and the other detected portions 62a, 62b, 62c, and 62d are connected by a narrow conductive line portion 64.

One detected portion 63 having the larger area than the areas of the other detected portions and the detected portions 62 having the smaller areas than the area of the detected portion 63 are provided on a card base illustrated in the drawing and are hidden by forming the similar paper, a synthetic resin sheet, and a printing layer. In this case, the detected portion 63 and the detected portions 62 connected to the detected portion 63 are insulated from the outside. However, by providing the detected portion 63 having the large area, the detected portions 62 can hold a charge (capacitance) capable of being detected by the touch panel. As a result, the detected portion 63 and the detected portions 62 can be detected by the touch panel.

Even though the area of the detected portion 63 is large, the touch panel can recognize the center position thereof as the coordinates where the detected portion 63 exists. Similarly, the touch panel can recognize the center positions of the other detected positions 62 as the coordinates where the detected portions 62 exist.

The electronic apparatus can acquire code information of the input device 60a, based on the detection coordinates of the detected portion 63 and the detected portions 62, and can use the code information as input information of the rearing simulation or the various operation programs.

The input device 60b has detected portions 65a, 65b, 65c, and 65d provided at positions of numbers 1, 21, 25, and 30 selected from the arrangement enabled positions denoted with 1 to 30. In addition, one detected portion 66 having a larger area than the four detected portions is provided at positions of numbers 5, 6, 11, and 12 of the arrangement enabled positions. The four detected portions 65a, 65b, 65c, and 65d are arranged with the detected portion 66 as a center and the detected portion 66 and the detected portions 65a, 65c, and 65d are connected by a narrow conductive line portion 67. In this example, the detected portion 65d is provided in the vicinity of an intermediate portion of a straight line coupling the detected portion 66 and the detected portion 65b. That is, the detected portion 66 and the detected portion 65d are connected by the conductive line portion 67 and the detected portion 65b and the detected portion 65d are connected by the conductive line portion 67. The detected portion 66 having the large area and the detected portions 65a, 65b, 65c, and 65d having the smaller areas than the detected portion 66 are preferably connected directly by the conductive line portion 67. However, two of the conductive line portions 67 may be combined together when these two of the conductive line portions 67 are closely provided to each other.

The input device 60c has detected portions 67a, 67b, and 67c provided at positions of numbers 1, 15, and 30 selected from the arrangement enabled positions denoted with 1 to 30. In addition, detected portions 68a and 68b each having a larger area than areas of the three detected portions are provided in two places of positions of numbers 5, 6, 11, and 12 of the arrangement enabled positions and positions of numbers 19, 20, 25, and 26 of the arrangement enabled positions. In this example, the detected portions 68a and 68b having the large areas are arranged at diagonal positions in a rectangular detected region. In this case, the other detected portions 67a, 67b, and 67c having the small areas are arranged to be interposed between the detected portions 68a and 68b having the large areas. In addition, the detected portions 67a, 67b, and 67c are connected to one of or both of the detected portions 68a and 68b by the conductive line portion 69.

When the detected portion occupying four places of the arrangement enabled positions denoted with 1 to 30 is provided, the center position of the detected portion does not match with any of the arrangement enabled positions. As a result, a number of combinations of the arrangement enabled positions denoted with 1 to 30 and the positions not matching with the arrangement enabled positions can be used to form unique and identifiable arrangements. In addition, if the arrangement of the detected portion having the large area is used as a standard, it can be detected that the input device is not placed at an appropriate position and a message can be displayed to a user if needed.

In each input device described above, the detected portions are, for example, provided inside the card such that the detected portions cannot be touched from the outside. However, even if the detected portions are insulated from the outside, the position of the detected portion having the large area is indicated on the card by printing performed on the surface, such that the position thereof on the touch panel can be touched by the finger. Although the detected portions are insulated, an electric influence through the human body can be given. Thereby, it can improve the reliability of the detection by performing the above control.

Further, as illustrated in Figs. 11 and 12, an opening to expose the detected portion having the large area may be provided in a portion to cover the surface of each input device 60. When the human body touches the detected portion through the opening, not only the detected portion touching the human body but also the detected portions which are connected to the detected portion touching the human body but are not directly touched by the human body can be detected. As a result, it can improve the reliability of the detection.

### Industrial Applicability

The present invention enables an input device that is identifiable by a touch panel to be applied as a unit to set an operation, a command, and information with respect to a program. Further, the invention can be used for various games, plays, and educational devices, in addition to the rearing simulation. In addition, the input device according to the present invention can be used for electronic apparatuses for various uses.

### REFERENCE SIGNS LIST

- 1: electronic apparatus
- 2: input device (input card)
- 3: image display unit
- 4: detected region
- 5: detected portion (conductive portion)
- 6: detected portion
- 7: conductive line portion
- 8: application provision server
- 9: code management server
- 10: content provision server
- 11a, 11b, 11c: object
- 13a, 13b, 13c: GUI switch
- 14: message display unit

## Claims

1. An image display system using an electronic apparatus including a capacitive detection-type touch screen panel as an image display unit, the touch panel detecting a plurality of touch positions, the system comprising:
a control unit that changes a form an object image displayed on the image display unit based on a change of set parameters or replaces the object image with another image based on the change of the set parameters, wherein
the parameters are changed by an input device having a plurality of detected portions detected by the capacitive detection-type touch screen panel.

2. An input device having a plurality of detected portions detected by a capacitive detection-type touch screen panel, the device comprising:
a planar detected region that touches the capacitive detection-type touch screen panel directly or indirectly, the planar detected region including the plurality of the detected positions, wherein
the plurality of the detected portions in the planar detected region includes a first detected portion having a larger area than areas of the other detected portions and the other detected portions arranged around the first detected portion and having smaller areas than the area of the first detected portion, and
the first detected portion and the other detected portions are connected by a conductive line portion having a narrow width.

3. The input device according to claim 2, wherein the first detected portion and the other detected portions are arranged on a base of a card shape member and the detected portions other than the first detected portion are coated with a sheet, an ink, or a pigment.
